# EUROPEAN PATENT SPECIFICATION

(11) **EP 3 512 070 B1**
(45) Date of publication and mention of the grant of the patent: **06.09.2023**
(21) Application number: 19151470.2
(22) Date of filing: 11.01.2019
(51) Int. Cl.: H02J 9/00, H02M 7/06, H02M 1/00

(54) **POWER SUPPLY CIRCUIT**
STROMVERSORGUNGSSCHALTUNG
CIRCUIT D'ALIMENTATION ÉLECTRIQUE

(30) Priority: 12.01.2018 IT 201800000770
(43) Date of publication of application: 17.07.2019
(73) Proprietor: Robertshaw Italy S.r.L., 24030 Terno d'Isola (BG) (IT)
(72) Inventor: Galeazzi, Daniele, 20871 Vimercate (MB) (IT); Lombardini, Luca, 20019 Settimo Milanese (MI) (IT)
(74) Representative: Petraz, Gilberto Luigi

(56) References cited:
- JP-A- 2002 325 454
- JP-A- 2005 130 643
- US-A- 5 812 383
- US-A- 5 995 388
- US-A1- 2002 075 708
- US-A1- 2012 161 522

## Description

### FIELD OF THE INVENTION

The present invention concerns a power supply circuit of the capacitive type, or "capacitive dropper", provided with devices to limit energy consumption during the stand-by step.

In particular, the invention concerns a supply circuit which uses a capacitive load to convert a main alternate voltage into a direct electric voltage of a lower value, suitable to supply a load.

### BACKGROUND OF THE INVENTION

It is known that energy supply circuits of the capacitive type are used to convert an alternate electric voltage AC, such as the electric voltage of a main power supply, into a direct electric voltage DC to supply a load, or a user device.

In place of a transformer, to lower the voltage, a capacitor is used, referred to in this specific field as a "drop" or voltage drop capacitor, coupled in series to the AC electric power supply network.

These power supply circuits are used in various applications, for example to power motor drives, electronic devices, household appliances, battery chargers, and other similar or comparable devices.

The capacitive power supply circuits generally comprise an entrance capacitor, that is, a "drop" capacitor, having a high capacity, to transform a high electric voltage into a low voltage, connected between the AC supply network, a rectifier circuit, and an output capacitor which also functions as a filter for leveling the electric voltage at exit.

The input alternate electric voltage periodically charges and discharges the capacitor, thus generating an electric current that flows through the capacitor and is rectified by the rectifier circuit, generally a diode bridge.

Despite the low cost and simplicity of the power supply circuits of the type discussed, their practical implementation is limited by some disadvantages.

First of all, the capacitive power supply circuit must be designed to be able to provide a range of electric voltages around a nominal output voltage value which must be supplied by the supply circuit to the load connected thereto.

The entrance capacitor must have sufficient capacity to provide sufficient power in correspondence with the minimum electric voltage in the range.

Therefore, in correspondence with the nominal electric voltage, the entrance capacitor supplies more electric current than is necessary, and therefore the excess energy is dissipated by suitable dissipating devices, also called "shunts", which block the electric voltage at exit at a predetermined value.

Moreover, the electric current which is obtained at output is directly correlated to the size of the "drop" capacitor and to the derivative of the electric input voltage, and does not depend, except to a minimal extent, on the electric voltage at exit and on the load.

Consequently, in correspondence with the output, excess energy is dissipated. This limits the use of capacitive power supply circuits in applications where low power consumption is required in the stand-by steps, that is, when the user device is not functioning and the circuit does not supply the load.

A low power stand-by for switched-mode power supply circuit with burst mode operation is described for example in the document US 5812383 A. Document US 2002/075708 A1 discloses a power supply having rectifier and shunt circuit. Document JP 2002 325454 A describes an AC/DC converter.

One purpose of the present invention is to provide a power supply circuit which allows to prevent the dissipation of the voltage/current rectified at exit during the stand-by steps of the load and/or the user device, that is, when the electronic devices are not functioning, and no energy, or only a minimal amount of energy, is required.

Another purpose of the present invention is to provide a power supply circuit which allows to reduce to a minimum the energy consumption in the stand-by steps, in particular for the electronic devices which are permanently connected to a power supply network.

Another purpose is to provide a supply circuit which is simple and economical, and at the same time efficient.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a power supply circuit is provided, suitable be coupled with an alternate electric voltage (AC) power source to convert it into a direct electric voltage (DC) on exit suitable to power a load of a user device.

By way of example only, the user devices in question can comprise electronic devices, such as for example electronic timers for ovens, devices to drive motors, domestic appliances, battery chargers, and other similar or comparable devices.

The power supply circuit comprises an entrance capacitor able to be connected to a first connector of the power source, a rectifier circuit connected between the entrance capacitor and the serially connected load, hereafter also called serial load.

The power supply circuit can also comprise an output capacitor connected downstream of the serial load, and also having the function of a filter to level the voltage on exit, and possible protection and energy dissipation means, connected in parallel to it.

The power supply circuit also comprises a stand-by switch coupled with the serial load, which is selectively able to be activated to adjust the electric voltage exiting on the load, and in particular to define a stand-by condition of the load, wherein the latter is not powered. In particular, the stand-by switch is off, to power the load during the normal functioning of the user device, and is on during the stand-by steps to short-circuit the serial load.

According to some embodiments, the power supply circuit comprises a control and command unit, for example a microprocessor, configured to manage the functioning of the power supply circuit.

The microprocessor is connected to the stand-by switch and is configured to selectively activate/deactivate it depending on the steps of normal functioning or stand-by of the user device.

Moreover, the microprocessor is configured to maintain the value of the electric voltage at exit from the power supply circuit, that is, the electric voltage between an output terminal of the load and a second connector of the power source, corresponding to the voltage at the possible output capacitor, inside a defined range of electric voltage.

According to one aspect of the present invention, the power supply circuit also comprises an energy saving circuit provided with an optical switch, or "opto-switch", connected between the entrance capacitor and the rectifier circuit.

The optical switch can be selectively activated when the exit electric voltage exceeds a maximum electric voltage value, and can be deactivated when the exit voltage drops below a minimum electric voltage value.

In this way, in particular when the load is on stand-by and therefore does not require any, or possibly only minimal energy, it is possible to significantly reduce the consumption of the power supply circuit, and satisfy the increasingly restrictive requirements imposed by legislation.

The power supply circuit according to the invention can therefore be used advantageously in a plurality of different applications and user devices, allowing both a reduction in the initial production costs and also a reduction in the running costs, due to the drastic reduction in overall energy consumption.

Moreover, the use of an optical switch guarantees high efficiency and minimum consumption.

According to possible solutions, the optical switch can be implemented with the LED device generally used to signal the stand-by condition of the load. This solution allows to further optimize production costs, since it is not necessary to provide an additional component to perform its function.

According to some embodiments, the energy saving circuit also comprises a controller configured to detect the exit voltage downstream of the load and to activate or deactivate the optical switch accordingly.

According to some embodiments, the switch is directly connected to and driven by the microprocessor, which also functions as a controller.

According to variant embodiments, the controller is a separate component and distinct from the microprocessor.

According to possible solutions, the controller can comprise an analog circuit, for example a voltage comparator and, as a function of the comparison of the value of the exit voltage with a reference value, can activate/deactivate the optical switch.

### BRIEF DESCRIPTION OF THE DRAWINGS

These and other characteristics of the present invention will become apparent from the following description of some embodiments, given as a non-restrictive example with reference to the attached drawings wherein:
- fig. 1 schematically shows a power supply circuit according to embodiments described here;
- fig. 2 schematically shows a power supply circuit according to embodiments described here;
- fig. 3 schematically shows a power supply circuit according to variant embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

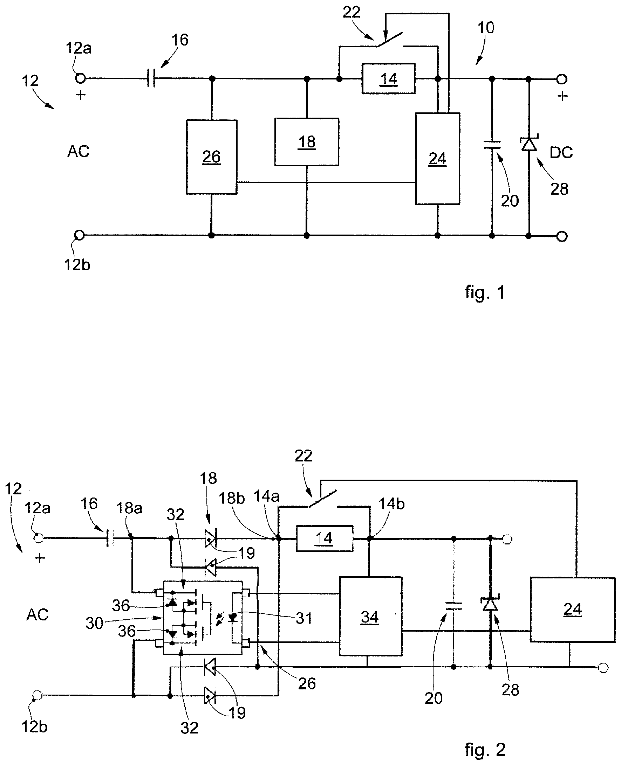

Embodiments described here with reference to figs. 1-3 concern a power supply circuit 10 of the capacitive type suitable to be coupled with a power supply source 12 of an alternate electric voltage AC and to convert the latter into a direct electric voltage DC suitable to power a load 14 of a user device.

The present invention can advantageously be applied to electric and electronic devices which remain normally connected to a power source, remaining in a stand-by condition when they are not in the normal functioning condition.

The power source 12 can be, for example, a traditional power supply network, which generally supplies an AC electric voltage at a value of 220-240 V and with a frequency of 50HZ, or 60Hz, between a first conductor 12a, or active conductor, and a second connector 12b, or neutral connector, or another suitable power supply device.

According to the invention, the supply circuit 10 comprises an entrance capacitor 16, also referred to as a "drop" capacitor, connected to the AC power source 12.

The entrance capacitor 16 is connected in series to the first connector 12a of the AC power source 12.

According to possible solutions, the entrance capacitor 16 can be any suitable type of capacitor, for example a ceramic, film, or electrolytic capacitor, or other type.

The supply circuit 10 also comprises a rectifier circuit 18, configured to rectify the alternate electric voltage supplied by the AC power source 12 and obtain a rectified electric voltage.

The rectifier circuit 18 is connected between the entrance capacitor 16 and the load 14.

According to some embodiments, the rectifier circuit 18 is connected with an input connector 18a to the entrance capacitor 16, and with an output connector 18b to an input terminal 14a of the load 14 connected in series.

According to some embodiments, the rectifier circuit 18 comprises a diode bridge 19, so as to straighten both the positive and negative half-waves of the alternate electric voltage.

The supply circuit 10 also comprises an output capacitor 20 connected to an output terminal 14b of the serial load 14, which performs the function of filtering the output voltage, leveling the oscillations, known as "ripples", to a substantially uniform voltage value.

According to some embodiments, the supply circuit 10 can comprise protection and energy dissipation means, comprising for example a Zener diode 28, connected in parallel to the output capacitor 20.

According to some embodiments, the output capacitor 20 has a relatively high capacity. By way of example, the output capacitor 20 can be an electrolytic capacitor, an aluminum polymer capacitor, or other suitable type.

According to the invention, the supply circuit 10 also comprises a stand-by switch 22, connected between the input 14a and output terminals 14b of the serial load 14, which can be selectively activated to prevent the supply of electric current to the load 14 in the stand-by condition of the user device.

In particular, the stand-by switch device 22 is open during normal functioning of the user device, to allow the rectifier circuit 18 to supply the load 14, and is closed during the stand-by steps, so as to short-circuit the load 14.

According to some embodiments, the supply circuit 10 comprises a control and command unit, for example a microprocessor 24, configured to manage the functioning of the supply circuit 10, for example as a function of the functioning of the user device.

The microprocessor 24 is connected to the stand-by switch device 22 and is configured to selectively activate and deactivate it according to the state of the user device.

According to other embodiments, the microprocessor 24 can also be configured to detect the output voltage between the output terminal 14b of the load 14 and the neutral conductor 12b.

According to some embodiments, the supply circuit 10 also comprises an energy saving circuit 26, connected between the entrance capacitor 16 and the rectifier circuit 18, and configured to prevent dissipation of the electric current rectified by the rectifier circuit when the electric voltage output falls below a predefined minimum voltage value.

According to some embodiments, the energy saving circuit 26 can be activated in particular so as to maintain the value of the electric voltage at exit, for example in correspondence with the heads of the output capacitor 20 inside a defined range of electric voltage, and to prevent the excess energy supplied by the rectifier circuit 18, and not used by the load 14, from being dissipated, for example through the Zener diode 28.

The energy-saving circuit 26 can be activated to short-circuit the rectifier circuit 18 when the output voltage exceeds a maximum voltage value, and can be deactivated when the output voltage falls below a minimum voltage value.

In this way, in particular when the load 14 is in a stand-by condition and therefore does not require any, or possibly only a minimal amount of energy, it is possible to considerably reduce the consumption of the supply circuit 10.

According to some embodiments, the energy saving circuit 26 comprises at least one optical switch 30, or "opto-switch".

According to some embodiments, the optical switch 30 comprises a photo-emitter 31, and at least a photo-transistor 32, generally mounted in a common housing. When the photo-emitter 31 emits a light beam toward the photo-transistor 32, it closes the circuit associated therewith, allowing the transit of an electric current, while when the photo-emitter 31 does not emit any light beam, the photo-transistor 32 is equivalent to an open circuit and does not allow the transit of electric current.

According to some embodiments, the photo-transistor 32 is associated with a protection diode 36.

The photo-emitter 31 can be, for example, a LED device (Light Emitting Diode), which can be switched on/off according to the output voltage downstream of the load 14.

According to some embodiments, the photo-transistor 32 is connected between the input connector 18a of the rectifier circuit 18 and the second connector 12b of the supply source 12 and, when activated, short-circuits the rectifier circuit 18, so that no current is supplied to the latter.

According to some embodiments, the optical switch 30 comprises two photo-transistors 32 connected in series to one another, and each provided with a respective protection diode 33.

The photo transistors 32 have respectively opposite configurations, each one suitable to define a closed circuit to allow the transit of the electric current during one of the positive, and respectively negative, half-waves of the AC input electric voltage.

The use of an optical switch 30 is advantageous since it is a single component, very compact, which can be easily installed on the electronic board on which the remaining components of the supply circuit 10 are connected.

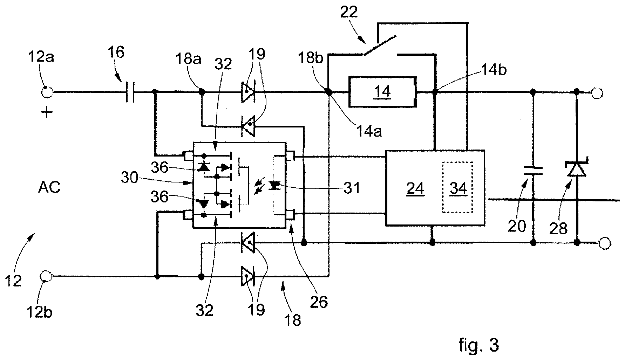

According to some embodiments, for example described with reference to figs. 1 and 3, the optical switch 30, and in particular the photo-emitter 31, is connected to, and directly driven by, the microprocessor 24.

According to the invention, the microprocessor 24 detects the electric voltage at exit and can selectively activate or deactivate the optical switch 30 during normal functioning or in stand-by conditions when the electric voltage at exit respectively rises above a maximum voltage value, or falls below a minimum electric voltage value.

According to the invention, for example described with reference to fig. 2, the energy-saving circuit 28 comprises a controller 34, configured to detect the electric voltage at exit downstream of the load 14, and to activate/deactivate the optical switch 30 according to the value of the electric voltage at exit.

According to the invention, the controller 34 is connected between the output terminal 14b of the load 14 and the second connector 12b, and is also connected to the microprocessor 24.

During the functioning of the supply circuit 10, the output capacitor 20 is charged by the electric current coming from the load 14 and its electric voltage is maintained by the microprocessor 24, or by the controller 32, inside a predefined range.

If the voltage at the heads of the output capacitor 20 exceeds the maximum electric voltage value of the predefined range, for example when the user device is in a stand-by condition, the optical switch 30 is activated to short-circuit the rectifier circuit 18, connecting its input connector 18a to the second connector 12b, so that energy consumption is close to zero.

According to some embodiments, during normal functioning, the maximum electric current available must be supplied to the load 14, so that, if the controller 32 is present, it is kept switched off, and the Zener diode 28, which fixes the electric voltage at exit, drains off the excess electric current.

According to some embodiments, the controller 32 can be the analog type.

For example, according to a possible solution, the controller 32 can comprise a comparator with reference electric voltage value and, depending on the comparison of the value of the electric voltage at exit with the reference value, it can activate/deactivate the optical switch 30.

According to possible solutions, it can be provided that the signal that pilots the photo-emitter 31 of the optical switch 30 is the same pilot signal of the LED normally used to signal the stand-by condition of the load 14, that is, the condition where the user device is connected to the power supply 12 but is not functioning.

According to these solutions, in fact, the LED signaling the stand-by condition is normally switched on when the stand-by switch device 22 is activated, and the load 14 is not powered. In this situation, therefore, the LED signaling the stand-by condition can be switched on by an analog circuit of the controller 32, or activated by means of a digital signal supplied by the microprocessor 24.

Embodiments described here also concern a method to reduce energy consumption in a power supply circuit of the capacitive type.

The method according to the invention provides to:
- convert an alternate electric voltage AC supplied by a power source 12 into a direct electric voltage DC to be supplied to a load 14 by an entrance capacitor 16 connected to a first connector 12a of the power source 12, and a rectifier circuit 18 connected between the entrance capacitor 16 and the load 14;
- detect and/or determine, by means of the microprocessor 24, a stand-by condition of the load 14;
- supply a direct electric current to the load 14 or to a circuit closed by a stand-by switch 22, respectively in normal functioning condition, or stand-by mode, of the load 14.

The method according to the invention also provides to detect an electric voltage at exit downstream of the load 14 by means of a controller 34 and, if the electric voltage at exit detected exceeds a predefined maximum voltage value, the method provides to activate the optical switch 30 in such a way as to short-circuit the rectifier circuit 18 and prevent the passage of the electric current through it.

According to other embodiments, the method also provides to deactivate the optical switch 30 when the electric voltage at exit is lower than a minimum voltage value, thus ensuring that the stand-by condition of the user device is maintained.

It is clear that modifications and/or additions of parts can be made to the power supply circuit 10 as described heretofore, without departing from the field and scope of the present invention.

It is also clear that, although the present invention has been described with reference to some specific examples, a person of skill in the art shall certainly be able to achieve many other equivalent forms of power supply circuit 10, that are within the scope of the appended claims and hence all coming within the field of protection defined thereby.

## Claims

1. Power supply circuit which can be coupled with an alternate electric voltage (AC) power source (12) and configured to convert the latter into a direct electric voltage (DC) to be supplied to a load (14), wherein said power supply circuit comprises:
- an entrance capacitor (16) connected to a first connector (12a) that is configured for connecting to said power source (12);
- a rectifier circuit (18) comprising a bridge (19), configured for rectifying both the positive and negative half-waves of the alternate electric voltage;
- a stand-by switch (22) for bypassing said load (14);
- a microprocessor (24) configured to activate/deactivate said stand-by switch (22), wherein an AC-side of the bridge (19) is connected to a node (18a) being a connection node between the entrance capacitor (16) and the stand-by switch (22), and another AC-side of the bridge is connected to a second connector (12b) configured for connecting to said power source, **characterized in that:**
the stand-by switch (22) is configured to short-circuit the load (14) when activated to achieve a stand-by condition of said load (14), wherein said load (14) is not powered,
said power supply circuit comprises a single optical switch (30) connected upstream of said rectifier circuit (18) and configured to be commutable between a non-active configuration, in which it defines an open circuit, and an active configuration in which it defines a closed circuit that short-circuits said rectifier circuit (18), and a controller (34) configured to detect the electric voltage at exit downstream of said load (14) and to activate said optical switch (30) in relation to the value of said electric voltage detected, wherein said optical switch (30) comprises at least a photo-transistor (32) associated with a protection diode (36) and connected between the entrance connector (18a) of said rectifier circuit (18) and a second connector (12b) of said power source (12), and a photo-emitter (31) configured for emitting a beam of light toward said photo-transistor (32) in order to activate it, and the controller (34) is connected to the microprocessor (24) and is connected between an output terminal (14b) of the load (14) and the second connector (12b), and is configured to selectively activate the optical switch when the detected electric voltage exceeds a maximum voltage value during normal functioning, and to selectively deactivate the optical switch when the detected electric voltage drops below a minimum voltage value during stand-by condition, the photo-emitter (31) and the photo-transistor (32) being mounted in a common housing.

2. Circuit as in claim 1, **characterized in that** said optical switch (30) comprises two photo-transistors (32) connected in series, and each provided with a respective protection diode (33), wherein said photo-transistors (32) have respectively opposite configurations, in which each of said configurations defines a closed circuit to allow the transit of the positive or negative electric current of said alternate electric voltage (AC).

3. Circuit as in claim 1 or 2, **characterized in that** the entrance or exit signal of said controller (34) also pilots a LED device suitable to act as signaler of the stand-by condition of said load (14), in which said stand-by switch (22) is active.

4. Circuit as in any claim hereinbefore, **characterized in that** said controller (34) is integrated in said microprocessor (24).

5. Circuit as in any of the claims from 1 to 3, **characterized in that** said controller (34) is a separate and distinct component from said microprocessor (24), wherein said controller (34) is selectively active as a function of the condition of said stand-by switch (22).

6. Circuit as in any claim hereinbefore, **characterized in that** said controller (34) comprises an analog circuit provided with an electric voltage comparator.

7. Method to power a load (14) to reduce energy consumption by means of a power supply circuit according to any claim hereinbefore, wherein the method provides to:
- convert an alternate electric voltage (AC) supplied by a power source (12) into direct electric voltage (DC) to be supplied to said load (14) by means of said supply circuit;
- activate/deactivate by means of a microprocessor (24) a stand-by switch (22) coupled with said load (14),
- feed a direct electric current toward said load (14), or respectively along a circuit closed by said stand-by switch (22), respectively in a normal functioning condition or stand-by condition of said load (14), wherein the stand-by switch (22) is configured to short-circuit the load (14) when activated to achieve a stand-by condition of said load (14), wherein said load (14) is not powered, wherein said power supply circuit comprises a single optical switch (30) connected upstream of said rectifier circuit (18) and configured to be commutable between a non-active configuration, in which it defines an open circuit, and an active configuration in which it defines a closed circuit that short-circuits said rectifier circuit (18), and wherein said optical switch (30) comprises at least a photo-transistor (32) associated with a protection diode (36) and connected between the entrance connector (18a) of said rectifier circuit (18) and a second connector (12b) of said power source (12), and a photo-emitter (31) configured for emitting a beam of light toward said photo-transistor (32) in order to activate it,
- detect an electric voltage at exit downstream of said load (14) by means of a controller (34) configured to selectively activate or deactivate the optical switch (30) during normal functioning or in stand-by conditions when the detected electric voltage respectively rises above a maximum voltage value, or falls below a minimum voltage value, the photo-emitter (31) and the photo-transistor (32) being mounted in a common housing.

## Patentansprüche

1. Stromversorgungsschaltung, die mit einer Wechselspannungs- (AC) Stromquelle (12) gekoppelt werden kann und eingerichtet ist, diese in eine Gleichspannung (DC) umzuwandeln, um einer Last (14) zugeführt zu werden, wobei die Stromversorgungsschaltung umfasst:
- einen Eingangskondensator (16), der mit einem ersten Verbinder (12a) verbunden ist, der eingerichtet ist, mit der Stromquelle (12) verbunden zu werden;
- eine Gleichrichterschaltung (18), die eine Brücke (19) umfasst, die eingerichtet ist, sowohl die positiven als auch negativen Halbwellen der Wechselspannung gleichzurichten;
- einen Stand-by-Schalter (22) zum Umgehen der Last (14) ;
- einen Mikroprozessor (24), der eingerichtet ist, den Stand-by-Schalter (22) zu aktivieren/deaktivieren, wobei eine Wechselspannungsseite der Brücke (19) mit einem Knoten (18a) verbunden ist, der ein Verbindungsknoten zwischen dem Eingangskondensator (16) und dem Stand-by-Schalter (22) ist, und eine andere Wechselspannungsseite der Brücke mit einem zweiten Verbinder (12b) verbunden ist, der zum Verbinden mit der Stromquelle eingerichtet ist,
**dadurch gekennzeichnet, dass**:
der Stand-by-Schalter (22) eingerichtet ist, die Last (14) kurzzuschließen, wenn er aktiviert ist, um einen Stand-By-Zustand der Last (14) zu erzielen, wobei die Last (14) nicht mit Strom versorgt wird,
die Stromversorgungsschaltung einen einzelnen optischen Schalter (30), der stromaufwärts der Gleichrichterschaltung (18) verbunden und eingerichtet ist, zwischen einer nicht aktiven Konfiguration, in der er eine offene Schaltung definiert, und einer aktiven Konfiguration, in der er eine geschlossene Schaltung definiert, die die Gleichrichterschaltung (18) kurzschließt, umschaltbar zu sein, und eine Steuereinheit (34) umfasst, die eingerichtet ist, die elektrische Spannung beim Austreten stromabwärts der Last (14) zu detektieren und den optischen Schalter (30) in Bezug auf den Wert der detektierten elektrischen Spannung zu aktivieren, wobei der optische Schalter (30) mindestens einen Fototransistor (32), der mit einer Schutzdiode (36) verknüpft und zwischen dem Eingangsverbinder (18a) der Gleichrichterschaltung (18) und einem zweiten Verbinder (12b) der Stromquelle (12) verbunden ist, und einen Fotoemitter (31), der eingerichtet ist, einen Lichtstrahl zu dem Fototransistor (32) zu emittieren, um diesen zu aktivieren, umfasst und die Steuereinheit (34) mit dem Mikroprozessor (24) verbunden ist und zwischen einem Ausgangsanschluss (14b) der Last (14) und dem zweiten Verbinder (12b) verbunden ist und eingerichtet ist, den optischen Schalter selektiv zu aktivieren, wenn die detektierte elektrische Spannung während einer normalen Funktionsweise einen maximalen Spannungswert übersteigt, und den optischen Schalter selektiv zu deaktivieren, wenn die detektierte elektrische Spannung während des Stand-by-Zustands unter einen minimalen Spannungswert fällt,
wobei der Fotoemitter (31) und der Fototransistor (32) in einem gemeinsamen Gehäuse montiert sind.

2. Schaltung nach Anspruch 1, **dadurch gekennzeichnet, dass** der optische Schalter (30) zwei Fototransistoren (32) umfasst, die in Reihe verbunden sind und jeder mit einer entsprechenden Schutzdiode (33) versehen ist, wobei die Fototransistoren (32) entsprechende entgegengesetzte Konfigurationen aufweisen, wobei jede der Konfigurationen eine geschlossene Schaltung definiert, um den Durchgang des positiven oder negativen elektrischen Stroms der Wechselspannung (AC) zu ermöglichen.

3. Schaltung nach Anspruch 1 oder 2, **dadurch gekennzeichnet, dass** das Eingangs- oder Ausgangssignal der Steuereinheit (34) auch eine LED-Vorrichtung steuert, die geeignet ist, als Signalgeber des Stand-by-Zustands der Last (14) zu dienen, in dem der Stand-by-Schalter (22) aktiv ist.

4. Schaltung nach einem vorstehenden Anspruch, **dadurch gekennzeichnet, dass** die Steuereinheit (34) in den Mikroprozessor (24) integriert ist.

5. Schaltung nach einem der Ansprüche 1 bis 3, **dadurch gekennzeichnet, dass** die Steuereinheit (34) eine von dem Mikroprozessor (24) separate und eigenständige Komponente ist, wobei die Steuereinheit (34) abhängig von dem Zustand des Stand-by-Schalters (22) selektiv aktiv ist.

6. Schaltung nach einem vorstehenden Anspruch, **dadurch gekennzeichnet, dass** die Steuereinheit (34) eine Analogschaltung umfasst, die mit einem elektrischen Spannungskomparator versehen ist.

7. Verfahren zur Stromversorgung einer Last (14), um Energieverbrauch mit Hilfe einer Stromversorgungsschaltung nach einem der vorstehenden Ansprüche zu verringern, wobei das Verfahren Folgendes vorsieht:
- Umwandeln einer Wechselspannung (AC), die von einer Stromquelle (12) zugeführt wird, in eine Gleichspannung (DC), die der Last (14) zugeführt wird, mittels der Versorgungsschaltung;
- Aktivieren/Deaktivieren mittels eines Mikroprozessors (24) eines Stand-by-Schalters (22), der mit der Last (14) gekoppelt ist;
- Einspeisen eines Gleichstroms zu der Last (14) oder entlang einer Schaltung die durch den Stand-by-Schalter (22) geschlossen ist, in einem normalen Funktionszustand oder Stand-by-Zustand der Last (14), wobei der Stand-by-Schalter (22) eingerichtet ist, die Last (14) kurzzuschließen, wenn er aktiviert ist, um einen Stand-By-Zustand der Last (14) zu erzielen, wobei die Last (14) nicht mit Strom versorgt wird, wobei die Stromversorgungsschaltung einen einzelnen optischen Schalter (30) umfasst, der stromaufwärts der Gleichrichterschaltung (18) verbunden und eingerichtet ist, zwischen einer nicht aktiven Konfiguration, in der er eine offene Schaltung definiert, und einer aktiven Konfiguration, in der er eine geschlossene Schaltung definiert, die die Gleichrichterschaltung (18) kurzschließt, umschaltbar zu sein, und wobei der optische Schalter (30) mindestens einen Fototransistor (32), der mit einer Schutzdiode (36) verknüpft und zwischen dem Eingangsverbinder (18a) der Gleichrichterschaltung (18) und einem zweiten Verbinder (12b) der Stromquelle (12) verbunden ist, und einen Fotoemitter (31), der eingerichtet ist, einen Lichtstrahl zu dem Fototransistor (32) zu emittieren, um diesen zu aktivieren, umfasst,
- Detektieren einer elektrischen Spannung beim Austreten stromabwärts der Last (14) mittels einer Steuereinheit (34), die eingerichtet ist, den optischen Schalter (30) während normaler Funktionsweise oder in Stand-by-Zuständen selektiv zu aktivieren oder zu deaktivieren, wenn die detektierte elektrische Spannung einen maximalen Spannungswert übersteigt beziehungsweise unter einen minimalen Spannungswert fällt, wobei der Fotoemitter (31) und der Fototransistor (32) in einem gemeinsamen Gehäuse montiert sind.

## Revendications

1. Circuit d'alimentation qui est apte à être relié à une source d'alimentation (12) à tension électrique alternative (AC) et configuré pour convertir cette dernière en une tension électrique continue (DC) à fournir à une charge (14), ledit circuit d'alimentation comprenant :
- un condensateur d'entrée (16) connecté à un premier connecteur (12a) qui est configuré pour être connecté à ladite source d'alimentation (12) ;
- un circuit redresseur (18) comprenant un pont (19), configuré pour redresser à la fois les demi-ondes positives et négatives de la tension électrique alternative ;
- un commutateur (22) de stand-by pour contourner ladite charge (14) ;
- un microprocesseur (24) configuré pour activer/désactiver ledit commutateur (22) de stand-by, un côté AC du pont (19) étant connecté à un noeud (18a) qui est un noeud de connexion entre le condensateur d'entrée (16) et le commutateur (22) de stand-by, et un autre côté AC du pont étant connecté à un deuxième connecteur (12b) configuré pour être connecté à ladite source d'alimentation, **caractérisé en ce que** :
le commutateur (22) de stand-by est configuré pour court-circuiter la charge (14) lorsqu'il est activé de façon à obtenir un état de stand-by de ladite charge (14), dans lequel ladite charge (14) n'est pas alimentée,
ledit circuit d'alimentation comprend un commutateur optique unique (30) connecté en amont dudit circuit redresseur (18) et configuré pour être commutable entre une configuration non active, dans laquelle il définit un circuit ouvert, et une configuration active dans laquelle il définit un circuit fermé qui court-circuite ledit circuit redresseur (18), et un contrôleur (34) configuré pour détecter la tension électrique en sortie en aval de ladite charge (14) et pour activer ledit commutateur optique (30) en fonction de la valeur de ladite tension électrique détectée, ledit commutateur optique (30) comprenant au moins un phototransistor (32) associé à une diode de protection (36) et connecté entre le connecteur d'entrée (18a) dudit circuit redresseur (18) et un deuxième connecteur (12b) de ladite source d'alimentation (12), et un photoémetteur (31) configuré pour émettre un faisceau lumineux vers ledit phototransistor (32) afin de l'activer, et le contrôleur (34) est connecté au microprocesseur (24) et est connecté entre une borne de sortie (14b) de la charge (14) et du deuxième connecteur (12b), et est configuré pour activer de façon sélective le commutateur optique lorsque la tension électrique détectée dépasse une valeur de tension maximale pendant le fonctionnement normal, et pour désactiver de façon sélective le commutateur optique lorsque la tension électrique détectée chute en dessous d'une valeur de tension minimale pendant l'état de stand-by, le photoémetteur (31) et le phototransistor (32) étant montés dans un boîtier commun.

2. Circuit selon la revendication 1, **caractérisé en ce que** ledit commutateur optique (30) comprend deux phototransistors (32) connectés en série, et munis chacun d'une diode de protection respective (33), lesdits phototransistors (32) ayant des configurations respectivement opposées, dans lesquelles chacune desdites configurations définit un circuit fermé pour permettre le transit du courant électrique positif ou négatif de ladite tension électrique alternative (AC).

3. Circuit selon la revendication 1 ou la revendication 2, **caractérisé en ce que** le signal d'entrée ou de sortie dudit contrôleur (34) pilote également un dispositif LED apte à agir comme signaleur de l'état de stand-by de ladite charge (14), dans lequel ledit commutateur (22) de stand-by est actif.

4. Circuit selon l'une quelconque des revendications précédentes, **caractérisé en ce que** ledit contrôleur (34) est intégré dans ledit microprocesseur (24).

5. Circuit selon l'une quelconque des revendications 1 à 3, **caractérisé en ce que** ledit contrôleur (34) est un composant séparé et distinct dudit microprocesseur (24), ledit contrôleur (34) étant actif de façon sélective en fonction de l'état dudit commutateur (22) de stand-by.

6. Circuit selon l'une quelconque des revendications précédentes, **caractérisé en ce que** ledit contrôleur (34) comprend un circuit analogique muni d'un comparateur de tension électrique.

7. Procédé pour alimenter une charge (14) afin de réduire la consommation d'énergie au moyen d'un circuit d'alimentation selon l'une quelconque des revendications précédentes, le procédé prévoyant de :
- convertir une tension électrique alternative (AC) fournie par une source d'alimentation (12) en tension électrique continue (DC) à fournir à ladite charge (14) au moyen dudit circuit d'alimentation ;
- activer/désactiver au moyen d'un microprocesseur (24) un commutateur (22) de stand-by relié à ladite charge (14),
- envoyer un courant électrique continu vers ladite charge (14), ou respectivement le long d'un circuit fermé par ledit commutateur (22) de stand-by, respectivement dans un état de fonctionnement normal ou un état de stand-by de ladite charge (14), le commutateur (22) de stand-by étant configuré pour court-circuiter la charge (14) lorsqu'il est activé de façon à atteindre un état de stand-by de ladite charge (14), dans lequel ladite charge (14) n'est pas alimentée, ledit circuit d'alimentation comprenant un seul commutateur optique (30) connecté en amont dudit circuit redresseur (18) et configuré de façon à être commutable entre une configuration non active, dans laquelle il définit un circuit ouvert, et une configuration active dans laquelle il définit un circuit fermé qui court-circuite ledit circuit redresseur (18), et dans lequel ledit commutateur optique (30) comprend au moins un phototransistor (32) associé à une diode de protection (36) et connecté entre le connecteur d'entrée (18a) dudit circuit redresseur (18) et un deuxième connecteur (12b) de ladite source d'alimentation (12), et un photoémetteur (31) configuré pour émettre un faisceau de lumière vers ledit phototransistor (32) afin de l'activer,
- détecter une tension électrique en sortie en aval de ladite charge (14) au moyen d'un contrôleur (34) configuré pour activer ou désactiver de façon sélective le commutateur optique (30) pendant le fonctionnement normal ou dans des conditions de stand-by lorsque la tension électrique détectée monte respectivement au-dessus d'une valeur de tension maximale, ou descend en dessous d'une valeur de tension minimale, le photoémetteur (31) et le phototransistor (32) étant montés dans un boîtier commun.
